Europäisches Patentamt

European Patent Office

Office européen des brevets

(19)

(11) Publication number: **0 290 466 B1**

(12) # EUROPEAN PATENT SPECIFICATION

(45) Date of publication of patent specification: **30.09.92**

(51) Int. Cl.5: **G06F 9/26**

(21) Application number: **87901237.5**

(22) Date of filing: **29.01.87**

(86) International application number:
**PCT/US87/00179**

(87) International publication number:
**WO 87/04820 (13.08.87 87/18)**

(54) **METHOD AND APPARATUS FOR REQUEUEING TRAPPED MICROADDRESSES IN A PIPELINED DATA PROCESSING SYSTEM.**

(30) Priority: **29.01.86 US 823777**

(43) Date of publication of application:
**17.11.88 Bulletin 88/46**

(45) Publication of the grant of the patent:
**30.09.92 Bulletin 92/40**

(84) Designated Contracting States:
**CH DE FR GB IT LI NL**

(56) References cited:
**EP-A- 0 092 646**
**US-A- 4 438 492**

**Electronic Design, volume 32, no. 23, 15 November 1984, (Waseca, MN, US), D. Ajmera et al.: "Bipolar building blocks deliver supermini speed to microcoded systems", pages 230-246.**

(73) Proprietor: **DIGITAL EQUIPMENT CORPORATION**
**111 Powdermill Road**
**Maynard Massachusetts 01754-1418(US)**

(72) Inventor: **CLARK, Douglas, W.**
**38 Saltonstall Road**
**Medford, MA 02155(US)**
Inventor: **MISHRA, Sudhindra, N.**
**4 Lincoln Drive**
**Acton, MA 01720(US)**

(74) Representative: **Goodman, Christopher et al**
**Eric Potter & Clarkson St. Mary's Court St. Mary's Gate**
**Nottingham NG1 1LE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

BACKGROUND OF THE INVENTION

1. Field of the Invention

This invention relates generally to data processing systems and, more particularly, to apparatus and method for permitting a pipelined and microprogrammed data processing system, having had a microinstruction sequence in current execution interrupted to perform a procedure having a higher priority, to return to the program sequence in execution at the time of the interruption.

2. Description of the Related Art

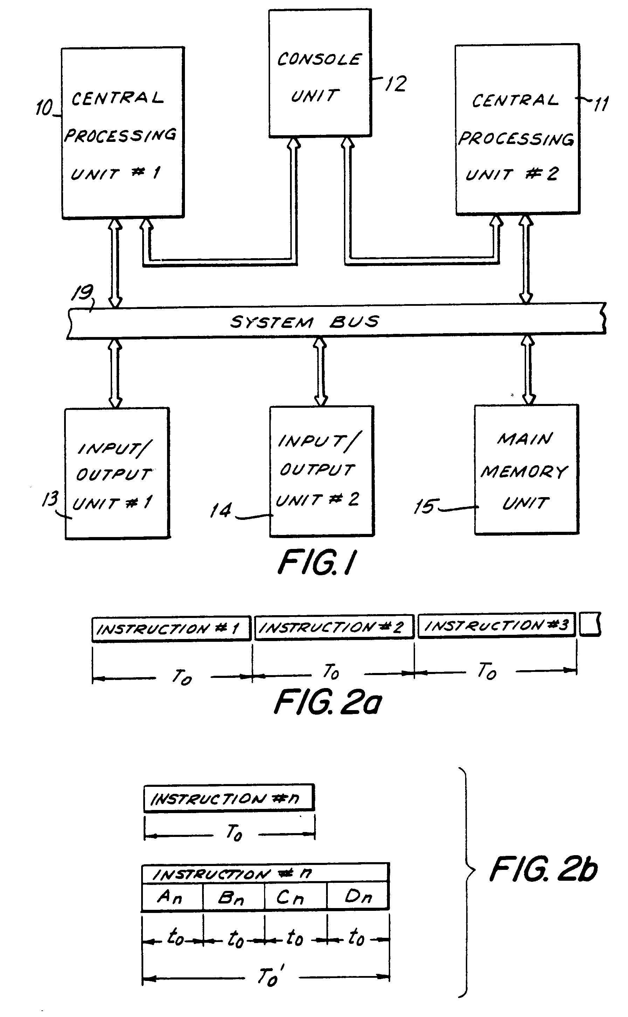

Referring to Figure 1, a typical data processing system is shown. The data processing system includes at least one central processing unit or subsystem 10 (or 11), at least one input/output unit or subsystem 13 (or 14), a main memory unit or subsystem 15 and a system bus 19 coupling the plurality of units or subsystems. The central processing unit(s) manipulate groups of logic signals according to a sequence of instructions in a program stored in software or firmware. Typically the logic signal groups and frequently the program itself are stored in the memory unit. The input/output unit(s) provide(s) an interface between the data processing system and terminal units, mass storage units, communication units and other units requiring coupling to the data processing system. A console unit can be coupled to the central processing unit(s) 12 in order to initialize the data processing system, to control test and diagnostic procedures, and to be used as a terminal unit after the system is in operation. The system bus, by providing a coupling between data processing system subsystems, provides a convenient technique for altering the configuration of the data processing system to accommodate a variety of processing requirements.

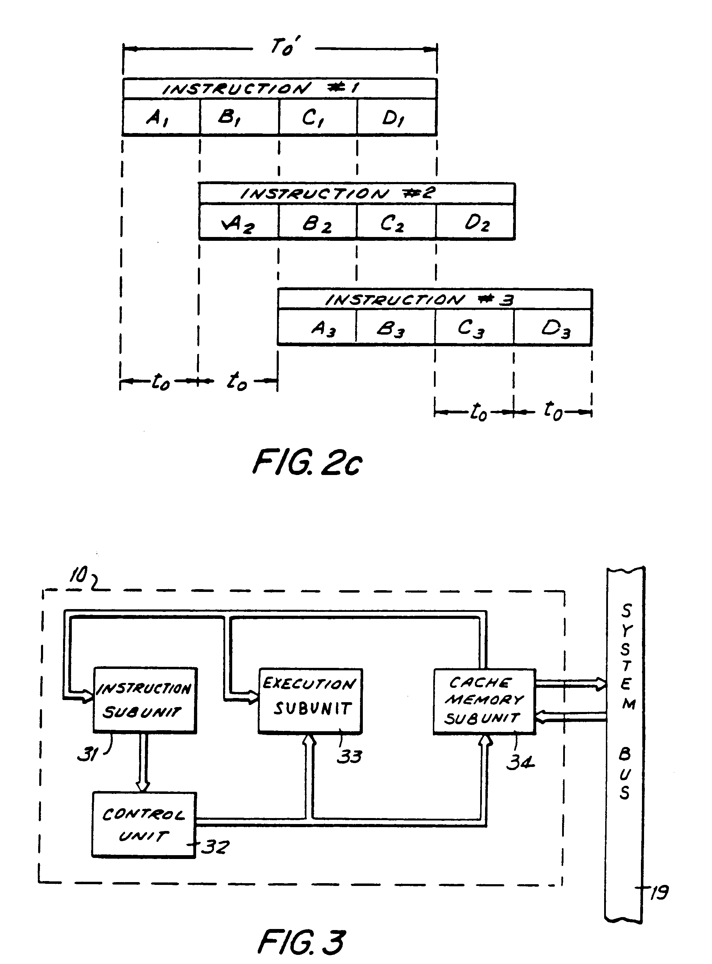

In a data processing system, such as is illustrated in Figure 1, the actual manipulation of data signal groups takes place under the control of a group of related instructions that is generally called a program. These instructions are executed in a sequence. Referring next to Figure 2a, the execution of a series of instructions according to the related art is illustrated. During a first time interval, $T_0$, the instruction #1, is executed by a central processing unit subsystem. After the first instruction is executed, a next instruction #2 in the sequence is executed by the central processing unit subsystem during the second time interval, $T_0$. Upon completion of instruction #2, the data processing unit executes instruction #3 during time

interval $T_0$. In order to maintain an orderly execution of instructions, the interval for the execution of any instruction by the data processing unit requires a predetermined period of time. If the execution time for an instruction can have a variable length, complex apparatus must then be included in the central processing unit to coordinate the exchange of data signal groups between the central processing unit and the other subsystems of the data processing system. Thus, the period for execution of the three instructions will generally be three times the basic time period. It will be clear that the basic time interval must be of sufficient duration to permit the execution of the lengthiest instruction in the instruction set.

In order to provide for faster operation of the data processing system, a technique for dividing the execution of an instruction into the execution of a plurality of instruction segments has been devised. By organizing the apparatus implementing the segments in an appropriate manner, the execution of the instructions can be performed in an overlapping manner. This technique is referred to as "pipelining" the execution of an instruction set. While the execution of each pipelined instruction can take a longer period of time than is required for the execution of a nonpipelined instruction, because of the additional apparatus required for the division of the instruction into the instruction segments, an instruction stream can be executed faster than is possible for the nonsegmented instructions. In Figure 2b, the division of an instruction into a plurality of segments is shown. It will be understood that each segment relates to a separate and independently operating group of components in the central processing unit. Registers and gates, according to principles well-known in the art of data processing system design, separate the operation of a component group executing a particular segment. The subinterval, $t_0$, for each segment must be of sufficient period of time to permit the execution of all possible segments in each apparatus group.

Referring next to Figure 2c, the resulting increase in the rate of execution of a sequence of instructions possible through the use of pipelining techniques is illustrated. Instruction #1 is now completed in the new (and possibly longer) time period of $T'_0$ equals n times $t_0$, where $t_0$ is the subinterval required for the execution of each instruction segment and where n is the number of instruction segments required for the execution of each instruction. The next instruction in the sequence, instruction #2, begins an interval $t_0$ after the beginning of instruction #1. The third instruction in the sequence, instruction #3, then begins an interval $t_0$ thereafter. Each instruction can take the increased amount of time for the execution. However, once the initial interval for the completion of the first instruction has passed, an instruction is completed after each interval $t_0$. Thus, for a sequence of instructions, the execution of the sequence can be accelerated even though the individual instruction can take an increased length of time to execute.

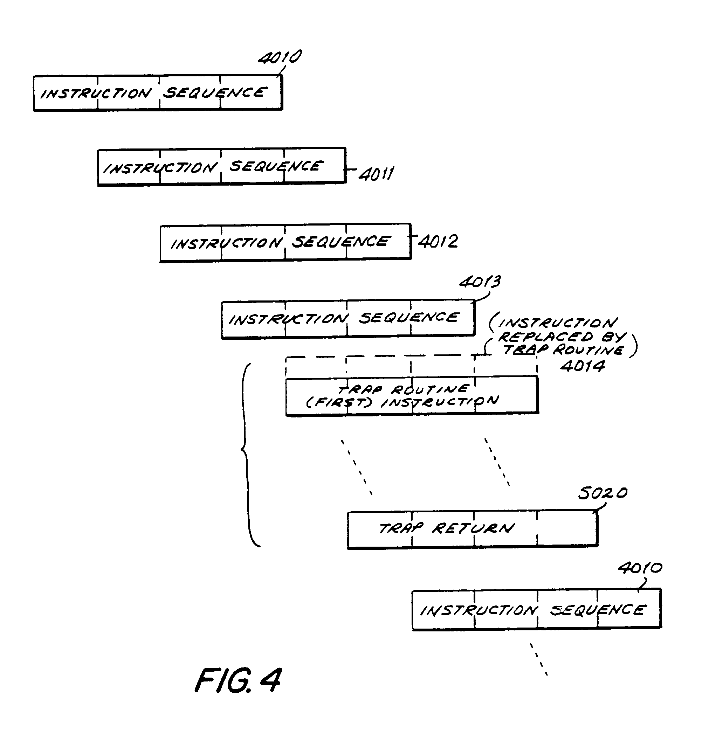

Referring next to Figure 3, an organization for a central processing unit 10 implementing the pipelined execution of an instruction sequence is shown. The central processing unit is divided into an instruction subunit 31 and associated control unit 32, an execution subunit 33 and a cache (or local) memory subunit 34. The cache memory subunit 34 is coupled to the system bus 19 and exchanges groups of logic signals with the other subsystems of the data processing system by means of the system bus under control of the control unit 32. The execution subunit 33, again under control of the control unit 32, performs the manipulation of the data signal groups that is defined by the instructions being executed. The instruction subunit 31 receives the instructions to be executed and reformats the instructions in a manner that can be used to control the operation of the central processing unit 10. The reformatted instructions, or at least portions thereof, are applied to the control unit 32 to provide the configuration of the logic elements of the data processing unit 10 to implement the operation defined by the instruction.

The structure defined above supports the use of microinstructions to implement macroinstructions. The macroinstructions can be implemented by a single microinstruction or by a plurality of microinstructions depending on the complexity, the nature of the apparatus of the central processing unit, and similar parameters. It is the microinstructions that are divided into microinstruction segments, as shown in Fig. 2b.

Referring to the simplified division of the data processing unit shown in Figure 3 and for purposes of illustrating the invention, the length of time for each unit of the central processing unit to complete its portion of an execution of an instruction will be taken to be equal. Thus, for an instruction to be executed by the data processing unit, the execution of a set of instructions is illustrated in Figure 2c. The first instruction will be processed by instruction subunit 31 during a first interval $t_0$. During a second interval $t_0$, the execution subunit 33 of the data processing unit can be processing the first instruction, while the instruction subunit 31 of the central processing system can be processing the second instruction. During the third interval $t_0$, the cache memory unit can be processing instruction #1, the execution unit can be processing instruction #2, and the instruction unit can be processing instruction #3. This three level pipeline can continue as long as instructions are entered into the instruction unit.

It will be clear that the division of the data processing unit into the indicated functional units is, in general, not sufficient to provide an operable pipeline configuration. Each of the functional units described above can require a plurality of suboperations to complete each requisite operation to complete the execution for each instruction. For purposes of illustration, a pipeline that includes four segments, instead of the three segments described with reference to Figure 3, will be used to describe the invention.

An apparatus and method are known whereby execution of the instruction sequence, in a pipelined instruction sequence, continues at the point of interruption of the sequence. US-A-4438492 discloses a pipelined and microprogrammed data processing system having an interruptable microprogram controller, wherein the addresses of microinstructions being executed are stored upon interruption and the stored addresses are always used when execution is resumed.

## SUMMARY OF THE INVENTION

It is an object of the present invention to provide an improved data processing system.

It is further object of the present invention to provide a technique for continuing execution of an instruction sequence after an interruption, at the point in the sequence at which the interruption occurred.

The aforementioned and other objects are accomplished, according to the present invention, by providing a method for requeuing addresses characterised as in claim 1. Additionally the present invention provides an apparatus for requeuing addresses characterised as in claim 5.

These and other features of the present invention will be understood upon reading of the following description along with the drawings.

## BRIEF DESCRIPTION OF THE DRAWINGS

FIG. 1 is a block diagram of a data processing system capable of utilizing the present invention.

FIG. 2 is a diagrammatic representation of the division of an instruction into segments.

FIG. 3 is a block diagram of a control unit that can be used to control a central processing unit using segmented instruction.

FIG. 4 is a diagrammatic representation of a sequence of instructions in execution that is interrupted by the identification of a trap condition.

FIG. 5 is a block diagram of the circuits used for requeueing trapped microaddresses according to the present invention.

FIG. 6 is a block diagram of the apparatus storing the decode marker signal.

FIG. 7 is a block diagram of the apparatus illustrating how the decode marker signal provides the Decoder Select signal.

FIG. 8 is a block diagram illustrating the generation of a microtrap return state signal.

OPERATION OF THE PREFERRED EMBODIMENT

1. Detailed Description of the Figures

Figure 1, Figure 2 and Figure 3 have been described in the discussion of the related art.

Referring to Figure 4, the requirement for the requeueing of microaddresses is illustrated. During the execution of instruction 4010, a trap condition is identified. In the example shown, the trap is identified during the fourth segment. Therefore, instructions 4011, 4012 and 4013 have begun execution and instruction 4014 would have followed had the trap condition not intervened. At the beginning of the next segment following the segment in which the trap condition was identified, a trap routine comprising instructions 5000 through 5020 is executed. The last instruction 5020 of the trap routine is a trap return instruction that terminates the trap routine. In order to resume execution of the original routine, the instructions 4011, 4012, 4013 and 4014 must be reentered into the microinstruction sequence, these instructions having been aborted.

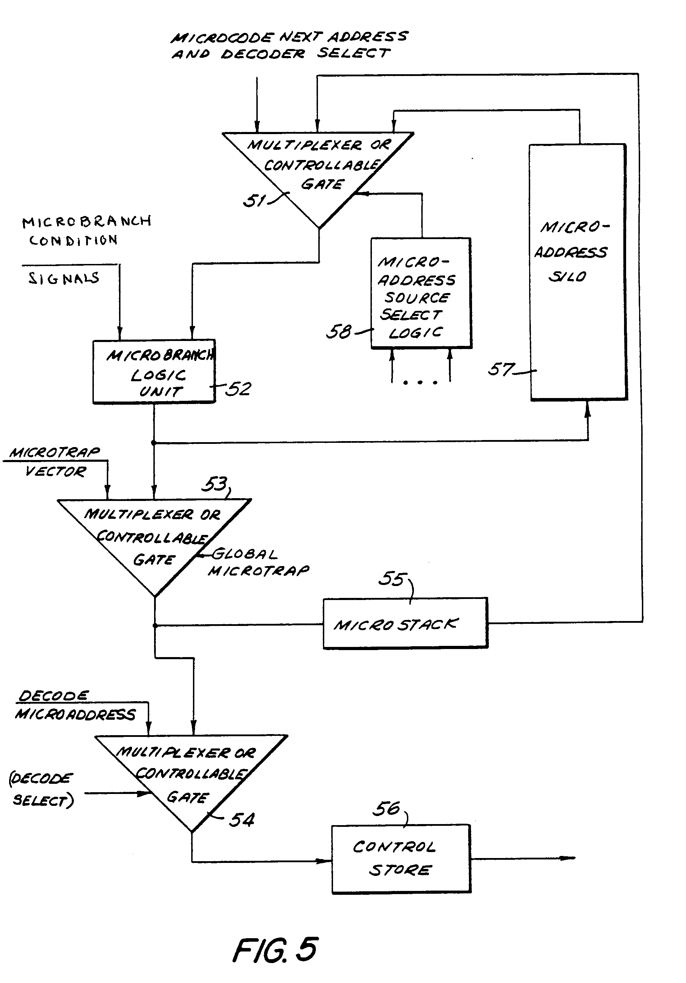

Referring next to Figure 5, a block diagram of the apparatus associated with the use of the present invention is shown. A controllable gate or multiplexer 51 selects a group of address signals that can eventually be applied to the control store 56. The selected signals can be Microcode Next Address with the Decoder Select signal, can be signals from the microaddress silo 57, or can be signals from the microstack 55. The Microcode Next Address is the address signal used in the normal microprogram sequence. The Decoder Select signal, used to control the multiplexer 54, is also used as a tag and is stored in the tag field of the silo. The signals from the microstack 55 are subroutine calling address sequences that make returns to the calling microprogram possible on completion of execution of a micro-subroutine. The microaddress silo 57 holds the signals needed to requeue the executing program after the execution of a trap routine. The signals selected by the controllable gate or multiplexer 51 are determined by the microaddress source select logic 58.

The output signals from the multiplexer 51 are applied to microbranch logic unit 52. The microbranch logic unit 52 also receives microbranch condition signals and these signal groups are processed in the microbranch logic unit according to a preestablished algorithm. The output signals of the microbranch logic unit 52 are applied to controllable gate or multiplexer 53 and to the microaddress silo 57. Any of the addresses 4011 to 4014 in Figure 4 could have resulted from the branch conditions produced by previous microinstructions. Because these conditions are not saved and restored across execution of trap routines, all resulting addresses 4011 through 4014 must be saved and requeued, rather than allowing the microbranch logic to regenerate them. The multiplexer 53 also receives microtrap vector signals, and the signal group selected by the multiplexer 53 and applied to its output terminals is determined by the presence or absence of a Global Microtrap signal, a signal that is generated when the trap conditions are identified.

The output signals of the multiplexer 53 are applied to the micro stack 55 and to a controllable gate or multiplexer 54. The multiplexer 54 also receives Decoder Microaddress signals, and the signals selected at the output terminals of the multiplexer 54 are determined by the assertion of the Decoder Select signal. The output signals from the multiplexer 54 are applied as the address to the control store 56. The output signals from the control store 56 are used to control the state of the central processing unit.

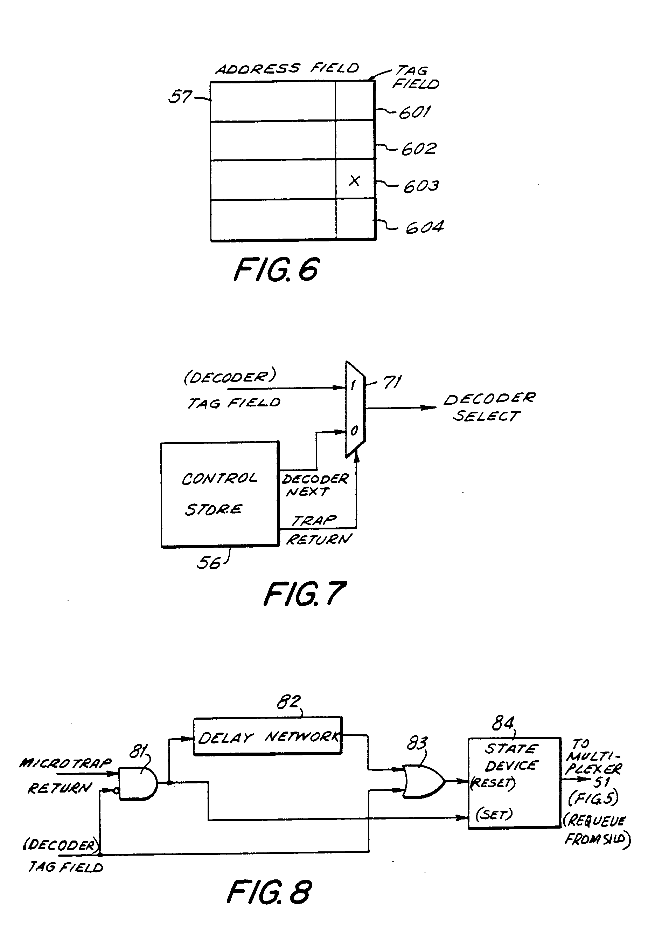

Referring next to Figure 6, a diagram illustrating the contents of the microaddress silo 57 is illustrated. The size of the silo is determined by the number of microinstructions that are in execution at the time that the trap conditions are identified. Referring to Figure 4, the instructions 4011, 4012 and 4013 are still in execution, and 4014 would follow, at the time of the trap condition identification in the fourth segment of the microinstruction 4010; therefore a four deep silo (having locations 601, 602, 603 and 604) is required. The address of the instruction 4014 replaced by the trap routine 5000 is thus saved at location 604 immediately behind the addresses of instructions 4011 (at location 601), 4012 (at location 602) and 4013 (at location 603) in the silo. The contents of each location in the silo 57 include a microaddress field and a (single bit position) tag field. Figure 6 also illustrates a feature of the present invention wherein the tag field is associated with the address in lieu of which decoder's address was used.

Referring next to Figure 7, the multiplexer/controllable gate 71 receives the Decoder Tag signal at one terminal and the Decoder Next signal at the second terminal. A signal associated with the Trap Return instruction selects the Decoder Tag signal for the duration that the Trap Return signal is present. After the Trap Return signal is removed, gate 71 thereafter selects the Decoder Next signal from the control store 56. The output signal of the multiplexer 71, after some processing, becomes the Decoder Select signal, which is applied to the control terminal of multiplexer 54 and is used as input to the microaddress silo 57 to be stored as the tag signal.

Referring next to Figure 8, the apparatus for selecting or not selecting the addresses in the silo is shown. The tag field signal of a location in silo 57 is applied to an inverting terminal of logic "AND" gate 81, while a second input terminal of logic "AND" gate 81 has a signal applied thereto when the Microtrap Return instruction is present. The output terminal of the logic "AND" gate 81 is coupled to an input terminal of delay network 82 and to a "set" terminal of a state device 84. The output terminal of delay network 82 is coupled to a first input terminal of logic "OR" gate 83, while a second input terminal of logic "OR" gate 83 receives the tag field signal. The output terminal of logic "OR" gate 83 is coupled to the "reset" terminal of state device 84. When the Microtrap Return signal and the tag field signal are present, then the signal at the output terminal of the state device 84 is not asserted and the silo 57 is prevented from applying addresses to the control store 56. When the Microtrap Return signal is present, but the tag field is not present, then the state device is set, resulting in the use of the address fields in the silo 57 to be used in addressing the control store 56. The state device 84 will be set for the delay time of the network 82. This delay time will be determined by the depth of the silo, and in the present example, the delay will be for three clock cycles, and, in conjunction with one cycle long trap return signal, it can be used to requeue the four microaddresses saved in the silo. During this period, if the tag signal is found to be asserted at any location in the silo, then state device 84 is reset via logic "OR" gate 83, thus preventing any subsequent requeueing.

## 2. Operation of the Preferred Embodiment

The operation of the present invention can be understood with reference to Figure 5. The control store 56 provides the signals that control the associated apparatus during the execution of a sequence of instructions. During the execution, if any reason arises requiring execution of a special microinstruction sequence, then the currently executing sequence must be interrupted, giving precedence to the special sequence and, on completion of which, the original sequence can be resumed. When such conditions, known as trap conditions, are identified in the data processing unit, then a Global Micro Trap signal is generated. The Global Micro Trap signal causes the multiplexer circuit 53 to apply the Microtrap Vector signal, appropriate for the trap condition, to the control store unit 56, thereby configuring the central processing unit to execute the trap procedure. In addition, the Global Micro Trap signal causes the contents of the microaddress silo 57 to be frozen for the duration of the execution of the trap procedure.

In the absence of the Global Micro Trap signal, the address of the control store is determined by multiplexer circuit 53 and multiplexer circuit 54. During the normal execution of an instruction sequence, the address applied to the control store unit 56 is determined by microbranch conditions, Microcode Next Address and Decoder Select signals and by subroutine calling an address stored in the microstack 55 . During return from a trap procedure, the microaddresses that would continue the interrupted microprogram sequence come from the microaddress silo 57. During normal operation of the central processing unit, the address applied to the control store units are stored in silo 57 along with its tag signal and are therefore available to reestablish the state of the central processing unit that existed at the time of identification of a trap condition.

The requeueing of the stored microaddresses has the following priorities as implemented by the present invention. The first priority is to synchronize the instruction sequence with the Decoder Tag signal. An explanation of the need for such synchronization is as follows. The Decoder Select signal causes multiplexer or controllable gate 54 to select the decoder-prepared microaddress which results from decoding of the current or following macroinstruction. Once the microprogam originating at the decoder's microaddress begins execution, the addresses stored in the silo are not necessary and may even be incorrect. The Decoder tag signal, derived from the Decoder Select signal and stored in the tag field portion of the silo 57, is available during the requeueing of the microaddresses from the silo 57 and is in time to decide if the decoder's microaddress should be selected in preference over the address from the silo 57. Such decision is made with the selection apparatus shown in Figure 7. Thus, the presence of the decoder tag signal in the silo causes the instruction sequence to be synchronized with the macroinstruction sequence. In other words, when the tag signal is in the first position, 601, of the silo 57 and the signal is then applied to the selection apparatus of Figure 7, the instruction sequence appears as if the preceding instruction (trap return instruction) had requested the next microinstruction address to come from the decoder. If the decoder tag signal is present in the tag field of the microaddress silo at a position other than the first position (i.e. 602, 603 or 604), the tag signal is used only to prevent the remaining addresses stored in the silo from being used. The corresponding preceding microinstruction, which gave rise to the Decoder Next signal, would during requeueing normally cause the selection of the decoder's microaddress, just as it did at the time of the trap. When the tag signal is not in the silo, the priority situation of requeueing all the addresses stored in microaddress silo 57 occurs. The result is that the original instruction sequence can be correctly resumed after the interruption.

The foregoing description is included to illustrate the operation of the preferred embodiment and is not meant to limit the scope of the invention. The scope of the invention is to be limited only by the following claims.

**Claims**

1. A method for requeuing addresses corresponding to microinstructions of a pipelined microinstruction sequence (4010-4014) after interruption of execution of the microinstruction sequence by execution of a trap routine of microinstructions (5001-5020), each microinstruction comprising N microinstruction segments and N microinstructions being executed at the same time, where N is an integer, comprising the steps of storing the address of each of the N most recently retrieved microinstructions of said sequence in a stack (57), each address being stored prior to the execution of the respective microinstruction in a corresponding cycle, executing a first microinstruction of said trap routine instead of the next microinstruction of said sequence in an interruption cycle in response to recognition of a predetermined trap condition, and executing the other microinstructions of said trap routine in successive cycles subsequent to said interruption cycle, until said trap routine is completed, characterized by the steps of storing a tag signal with the microinstruction address being stored if a microaddress generated by a decoder was used in place of a microinstruction address from the stack (57), and testing the N addresses which are stored at the time of said interruption cycle in the order in which they are stored for the presence of a tag signal associated therewith, all of said N addresses being requeued in the order in which they are stored if none of the stored N addresses has a tag signal associated therewith and only those addresses preceding the first address which has a tag signal associated therewith being requeued if any one of the stored N addresses has a tag signal associated therewith.

2. The method as defined in claim 1, further characterized by the step of selecting an address from said decoder in response to the condition wherein the first stored address of said N stored addresses has a tag signal associated therewith.

3. The method as defined in claim 1, further characterized By the step of executing the microinstructions corresponding to said requeued addresses.

4. The method as defined in claim 1, characterized in that N equals 4.

5. An apparatus for requeuing addresses corresponding to microinstructions of a pipelined microinstruction sequence(4011-4014) after interruption of execution of the microinstruction sequence by execution of a trap routine of microinstructions(5001-5020), each microinstruction comprising N microinstruction segments and N microinstructions being executed at the same time, where N is an integer, comprising:
   means (51) for successively selecting said addresses of said microinstruction sequence;
   storage means (57) for storing the address of each of the N most recently selected microinstructions of said sequence in a stack, each address being stored prior to execution of the respective microinstruction in a corresponding cycle; and
   trap means (53) for executing a first microinstruction of said trap routine instead of the next microinstruction of said sequence in an interruption cycle in response to recognition of a predetermined trap condition followed by the other microinstructions of said trap routine in successive cycles subsequent to said interruption cycle until said trap routine is completed,
   characterized in that said apparatus comprises tag means (52) for storing a tag signal with the microinstruction address being stored if a microaddress generated by a decoding means was used in place of a microinstruction address from the storage means (57),
   testing means (81-83) for testing the N addresses which are stored in said storage means at the time of said interruption cycle in the order in which they are stored for the presence of a tag signal associated therewith, and
   requeuing means (51,84) for requeuing all of said N addresses in the order in which they are stored if none of the stored N addresses has a tag signal associated therewith and requeuing only those addresses preceding the first address which has a tag signal associated therewith if any one of the stored N addresses has a tag signal associated therewith.

6. The apparatus as defined in claim 5, further characterized by means (54,71) for selecting an address from said decoding means in response to the condition wherein the first stored address of said N stored addresses has a tag signal associated therewith.

7. The apparatus as defined in claim 5, characterized in that said requeuing means comprises a state device (84) coupled to said testing means and having a set condition and a reset condition, and said selecting means (51) being controlled by said state machine and coupled to said storage means (57), said state device being placed in said reset condition in response to the presence of a tag signal, whereby the addresses stored in said storage means are not passed by said selecting means.

8. The apparatus as defined in claim 7, characterized in that said testing means comprises an AND gate (81) having inputs coupled to receive a trap return signal and an inverted tag signal, delay means (82) coupled to the output of said AND gate, and an OR gate (83) having inputs coupled to receive a tag signal or a delayed signal from said delay means, said state device (84) having a reset terminal coupled to the output of said OR gate and a set terminal coupled to the output of said AND gate, said state device being placed in said set condition in response to the presence of a trap return signal and the absence of a tag signal, whereby the addresses stored in said storage means (57) are passed by said selecting means (51).

9. The apparatus as defined in claim 8, characterized in that said delay means provides a delay of N-1 cycles.

10. The apparatus as defined in claim 5, characterized in that N equals 4.

**Patentansprüche**

1. Verfahren zum Neueinreihen von Adressen, die Mikrobefehlen einer fließbandverarbeiteten Mikrobefehlssequenz (4010-4014) zugeordnet sind, nach der Unterbrechung der Ausführung der Mikrobefehlssequenz durch Ausführung eines Unterbrechungsprogramms aus Mikrobefehlen (5001-5020), wobei jeder Mikrobefehl N Mikrobefehlssegmente aufweist und wobei N Mikrobefehle zur gleichen Zeit ausgeführt werden, wobei N eine ganze Zahl ist, und das Verfahren aufweist die Schritte des Speicherns der Adresse jeder der N unmittelbar vorher geholten Mikrobefehle der Sequenz in einem Stapelspeicher (57), wobei jede Adresse vor der Ausführung des zugeordneten Mikrobefehls in einem entsprechenden Zyklus gespeichert wird, des Ausführens eines ersten Mikrobefehls des Unterbrechungsprogramms anstatt des nächsten Mikrobefehls der Sequenz in einem Unterbrechungszyklus in Antwort auf die Erkennung einer vorgegebenen Unterbrechungsbedingung und des Ausführens der anderen Mikrobefehle des Unterbrechungsprogramms in hintereinanderfolgenden Zyklen nachfolgend dem Unterbrechungszyklus, bis das Unterbrechungsprogramm abgeschlossen ist, gekennzeichnet durch die Schritte des Speicherns eines Hinweissignals auf die Mikrobefehlsadresse, die gespeichert wird, wenn eine durch einen Dekoder erzeugte Mikroadresse anstelle einer Mikrobefehlsadresse von dem Stapelspeicher (57) verwendet worden ist, und des Überprüfens der N Adressen, die während des Unterbrechungszyklusses gespeichert wurden, in der Reihenfolge, in der sie gespeichert sind, nach dem Vorhandensein eines ihnen zugeordneten Hinweissignals, wobei alle N Adressen in der Reihenfolge neueingereiht werden, in der sie gespeichert sind, wenn keiner der gespeicherten N Adressen ein Hinweissignal zugeordnet ist, und wobei nur diejenigen Adressen, die der ersten Adresse vorhergehen, der ein Hinweissignal zugeordnet ist, neu eingereiht werden, wenn irgendeine der gespeicherten N Adressen ein ihr zugeordnetes Hinweissignal hat.

2. Verfahren, wie in Anspruch 1 definiert, weiterhin gekennzeichnet durch den Schritt des Auswählens einer Adresse aus dem Dekoder in Antwort auf die Bedingung, wenn die erste gespeicherte Adresse der N gespeicherten Adressen ein ihr zugeordnetes Hinweissignal hat.

3. Verfahren, wie in Anspruch 1 definiert, weiterhin gekennzeichnet durch den Schritt des Ausführens der Mikrobefehle entsprechend der neu eingereihten Adressen.

4. Verfahren, wie in Anspruch 1 definiert, dadurch gekennzeichnet, daß N gleich 4 ist.

5. Vorrichtung zum Neueinreihen von Adressen, die Mikrobefehlen einer fließbandverarbeitenden Mikrobefehlssequenz (4011-4014) zugeordnet sind, nach dem Unterbrechen der Ausführung der Mikrobefehlssequenz durch Ausführen eines Unterbrechungsprogramms aus Mikrobefehlen (5001-5020), wobei jeder Mikrobefehl N Mikrobefehlssegmente aufweist und N Mikrobefehle zur gleichen Zeit ausgeführt werden, wobei N eine ganze Zahl ist, mit:

einer Einrichtung (51) zum hintereinanderfolgenden Auswählen der Adressen aus der Mikrobefehlssequenz;

eine Speichereinrichtung (57) zum Speichern der Adresse jeder der N unmittelbar zuvor ausgewählten Mikrobefehle der Sequenz in einem Stapelspeicher, wobei jede Adresse vor der Ausführung des zugeordneten Mikrobefehls in einem entsprechenden Zyklus gespeichert wird; und

eine Unterbrechungseinrichtung (53) zum Ausführen eines ersten Mikrobefehls des Unterbrechungsprogramms anstelle des nächsten Mikrobefehls der Sequenz in einem Unterbrechungszyklus in Antwort auf die Erkennung einer vorgegebenen Unterbrechungsbedingung, gefolgt von den weiteren Mikrobefehlen des Unterbrechungsprogramms in hintereinanderfolgenden Zyklen nachfolgend dem Unterbrechungszyklus, bis das Unterbrechungsprogramm abgeschlossen ist, dadurch gekennzeichnet, daß die Vorrichtung aufweist

eine Hinweiseinrichtung (52) zum Speichern eines Hinweissignals auf die Mikrobefehlsadresse, die gespeichert wird, wenn eine durch eine Dekodiereinrichtung erzeugte Mikroadresse anstelle einer Mikrobefehlsadresse aus der Speichereinrichtung (57) verwendet wurde;

eine Prüfeinrichtung (81-83) zum Überprüfen der N Adressen, die in der Speichereinrichtung während des Unterbrechungszyklusses gespeichert werden, in der Reihenfolge, in der sie gespeichert sind, nach dem Vorhandensein eines ihnen zugeordneten Hinweissignals; und

eine Einreiheinrichtung (51, 84) zum Neueinreihen aller N Adressen in der Reihenfolge, in der sie gespeichert sind, wenn keiner der N Adressen ein Hinweissignal zugeordnet ist, und zum Neueinreihen nur jener Adressen, die der ersten Adresse vorhergehen, der ein Hinweissignal zugeordnet ist, wenn irgendeine der gespeicherten N Adressen ein ihr zugeordnetes Hinweissignal hat.

6. Vorrichtung, wie in Anspruch 5 definiert, weiterhin gekennzeichnet durch eine Einrichtung (54, 71) zum Auswählen einer Adresse aus der Dekodiereinrichtung in Antwort auf die Bedingung, wenn die erste gespeicherte Adresse der N gespeicherten Adressen ein ihr zugeordnetes Hinweissignal hat.

7. Vorrichtung, wie in Anspruch 5 definiert, dadurch gekennzeichnet, daß die Einrichtung zum erneuten Einreihen eine Zustandseinrichtung (84) hat, die mit der Prüfeinrichtung verbunden ist und eine Setzbedingung und eine Rücksetzbedingung hat, und daß die Auswahleinrichtung (51) durch die Zustandseinrichtung gesteuert wird und mit der Speichereinrichtung (57) verbunden ist, wobei die Zustandseinrichtung in die Rücksetzbedingung in Antwort auf das Vorhandensein eines Hinweissignals versetzt wird, wodurch die Adressen, die in der Speichereinrichtung gespeichert sind, von der Auswahleinrichtung nicht berücksichtigt werden.

8. Vorrichtung, wie in Anspruch 7 definiert, dadurch gekennzeichnet, daß die Prüfeinrichtung ein UND-Gatter (81) mit Eingängen, die verbunden sind, um ein Unterbrechungs-Rückkehrsignal und ein invertiertes Hinweissignal zu empfangen, eine Verzögerungseinrichtung (82), die mit dem Ausgang des UND-Gatters verbunden ist, und ein ODER-Gatter (83) mit Eingängen aufweist, die verbunden sind, um ein Hinweissignal oder ein verzögertes Signal von der Verzögerungseinrichtung zu empfangen, wobei die Zustandseinrichtung (84) einen Rücksetzanschluß hat, der mit dem Ausgang des ODER-Gatters verbunden ist, und einen Setzanschluß hat, der mit dem Ausgang des UND-Gatters verbunden ist, und die Zustandseinrichtung in die Setzbedingung in Antwort auf das Vorhandensein eines Unterbrechungs-Rückkehrsignals und der Abwesenheit des Hinweissignals versetzt wird, wodurch die Adressen, die in der Speichereinrichtung (57) gespeichert sind, von der Auswahleinrichtung (51) berücksichtigt werden.

9. Vorrichtung, wie in Anspruch 8 definiert, dadurch gekennzeichnet, daß die Verzögerungseinrichtung eine Verzögerung von N-1 Zyklen erzeugt.

10. Vorrichtung, wie in Anspruch 5 definiert, dadurch gekennzeichnet, daß N gleich 4 ist.

**Revendications**

1. Procédé pour remettre en file d'attente des adresses correspondant à des micro-instructions d'une séquence de micro-instructions chevauchantes (4010-4014) après interruption de l'exécution de la séquence de micro-instructions par l'exécution d'un sous-programme d'interruption de micro-instructions (5001-5020), chaque micro-instruction comprenant N segments de micro-instruction et N micro-instructions étant exécutées simultanément, N étant un nombre entier, comportant les étapes qui consistent à stocker dans une pile (57) l'adresse de chacune des N micro-instructions de ladite séquence extraites le plus récemment, chaque adresse étant stockée préalablement à l'exécution de la micro-instruction correspondante au cours d'un cycle correspondant, à exécuter une première micro-instruction dudit sous-programme d'interruption au lieu de la micro-instruction suivante de ladite séquence au cours d'un cycle d'interruption en réponse à l'identification d'un état d'interruption prédéterminé, et à exécuter les autres micro-instructions dudit sous-programme d'interruption au cours de cycles successifs après ledit cycle d'interruption, jusqu'à ce que ledit sous-programme d'interruption soit achevé, caractérisé par les étapes qui consistent à stocker un signal indicateur en association avec l'adresse de micro-instruction en train d'être stockée si une micro-adresse générée par un décodeur a été utilisée à la place d'une adresse de micro-instruction provenant de la pile (57), et à tester les N adresses stockées au moment dudit cycle d' interruption dans l'ordre dans lequel elles sont stockées pour rechercher la présence d'un signal indicateur associé à celles-ci, lesdites N adresses étant toutes remises en file d'attente dans l'ordre dans lequel elles sont stockées, si aucune des N adresses stockées ne possède un signal indicateur associé à elle, et seules les adresses qui précèdent la première adresse comportant un signal indicateur associé à elle étant remises en file d'attente, si l'une quelconque des N adresses stockées possède un signal indicateur associée à elle.

2. Procédé tel que défini dans la revendication 1, également caractérisé par l'étape qui consiste à sélectionner une adresse à partir dudit décodeur en réponse à l'état dans lequel la première adresse stockée desdites N adresses stockées possède un signal indicateur associée à elle.

3. Procédé tel que défini dans la revendication 1, caractérisé aussi par l'étape qui consiste à exécuter les micro-instructions correspondant auxdites adresses remises en file d'attente.

4. Procédé tel que défini dans la revendication 1, caractérisé en ce que N est égal à 4.

5. Appareil pour remettre en file d'attente des adresses correspondant à des micro-instructions d'une séquence de micro-instructions chevauchantes (4011-4014) après interruption de l'exécution de la séquence de micro-instructions par l'exécution d'un sous-programme d'interruption de micro-instructions (5001-5020), chaque micro-instruction comprenant N segments de micro-instruction et N micro-instructions étant exécutées simultanément N étant un nombre entier, comportant :

des moyens (51) pour sélectionner successivement lesdites adresses de ladite séquence de micro-instructions;

des moyens de stockage (57) pour stocker dans une pile l'adresse de chacune des N micro-instructions de ladite séquence sélectionnées le plus récemment, chaque adresse étant stockée préalablement à l'exécution de la micro-instruction correspondante au cours d'un cycle correspondant; et

des moyens d'interruption (53) pour exécuter une première micro-instruction dudit sous-programme d'interruption au lieu de la micro-instruction suivante de ladite séquence au cours d'un cycle d'interruption en réponse à l'identification d'un état d'interruption prédéterminé suivie par les autres micro-instructions dudit sous-programme d'interruption au cours de cycles successifs après ledit cycle d'interruption jusqu'à ce que ledit sous-programme d'interruption soit achevé,

caractérisé en ce que ledit appareil comporte des moyens indicateurs (52) pour stocker un signal indicateur en association avec l'adresse de micro-instruction en train d'être stockée, si une micro-adresse générée par un moyen décodeur a été utilisée à la place d'une adresse de micro-instruction provenant des moyens de stockage (57),

des moyens de test (81-83) pour tester les N adresses stockées dans lesdits moyens de stockage au moment dudit cycle d'interruption dans l'ordre dans lequel elles sont stockées pour rechercher la présence d'un signal indicateur associé à celles-ci, et

des moyens de remise en file d'attente (51, 84) pour remettre en file d'attente toutes lesdites N adresses dans l'ordre dans lequel elles sont stockées, si aucune des N adresses stockées ne possède un signal indicateur associé à elle, et pour remettre en file d'attente uniquement les adresses qui précèdent la première adresse comportant un signal indicateur associé à elle, si l'une quelconque des N adresses stockées possède un signal indicateur associé à elle.

6. Appareil tel que défini dans la revendication 5, également caractérisé par des moyens (54, 71) destinés à sélectionner une adresse à partir dudit moyen décodeur en réponse à l'état dans lequel la première adresse stockée desdites N adresses stockées possède un signal indicateur associé à elle.

7. Appareil tel que défini dans la revendication 5, caractérisé en ce que lesdits moyens de remise en file d'attente comportent un automate fini (84) relié auxdits moyens de test et doté d'un état de mise à un et d'un état de remise à zéro, tandis que lesdits moyens sélectionneurs (51) sont commandés par ledit automate fini et reliés auxdits moyens de stockage (57), ledit automate fini étant placé dans ledit état de remise à zero en réponse à la présence d'un signal indicateur, pour qu'ainsi les adresses stockées dans lesdits moyens de stockage ne soient pas parcourues par lesdits moyens sélectionneurs.

8. Appareil tel que défini dans la revendication 7, caractérisé en ce que lesdits moyens de test comportent une porte ET (81) qui possède des entrées raccordées pour recevoir un signal de retour d' interruption et un signal indicateur inversé, des moyens de temporisation (82) reliés à la sortie de ladite porte ET, et une porte OU (83) qui possède des entrées raccordées pour recevoir un signal indicateur ou un signal temporisé provenant desdits moyens de temporisation, ledit automate fini (84) comportant une borne de remise à zéro reliée à la sortie de ladite porte OU et une borne de mise à un reliée à la sortie de ladite porte ET, ledit automate fini étant placé dans ledit état de mise à un en réponse à la présence d'un signal de retour d'interruption et à l'absence d'un signal indicateur, pour qu'ainsi les adresses stockées dans lesdits moyens de stockage (57) soient parcourues par lesdits moyens sélectionneurs (51).

9. Appareil tel que défini dans la revendication 8, caractérisé en ce que lesdits moyens de temporisation définissent une temporisation de N-1 cycles.

10. Appareil tel que défini dans la revendication 5, caractérisé en ce que N est égal à 4.

FIG.1

FIG.2a

FIG.2b

FIG. 2c

FIG. 3

_4010_

| INSTRUCTION | SEQUENCE | | |

| INSTRUCTION | SEQUENCE | | | — _4011_

| INSTRUCTION | SEQUENCE | | — _4012_

_4013_

| INSTRUCTION | SEQUENCE | | |

(INSTRUCTION REPLACED BY TRAP ROUTINE)

_4014_

| TRAP ROUTINE (FIRST) INSTRUCTION | | |

_5020_

| TRAP RETURN | | |

_4010_

| INSTRUCTION | SEQUENCE | | |

# FIG. 4

*MICROCODE NEXT ADDRESS AND DECODER SELECT*

MULTIPLEXER OR CONTROLLABLE GATE
51

MICROBRANCH CONDITION

SIGNALS

MICROBRANCH LOGIC UNIT
52

MICRO- ADDRESS SOURCE SELECT LOGIC
58

MICRO- ADDRESS SILO
57

MICROTRAP VECTOR

53

MULTIPLEXER OR CONTROLLABLE GATE

GLOBAL MICROTRAP

MICRO STACK
55

DECODE MICROADDRESS

MULTIPLEXER OR CONTROLLABLE GATE
54

(DECODE SELECT)

CONTROL STORE
56

*FIG. 5*

14

FIG. 6

FIG. 7

FIG. 8

15